# EUROPEAN PATENT SPECIFICATION

(11) **EP 1 014 254 B1**
(45) Date of publication and mention of the grant of the patent: **25.06.2008**
(21) Application number: 99125095.2
(22) Date of filing: 16.12.1999
(51) Int. Cl.: G06K 7/10, G06F 3/033, G06K 9/22

(54) **Multi-moded scanning pen with feedback**
Abtaststift mit mehreren Betriebsmoden und mit Rückmeldung
Crayon-lecteur a balayage ayant plusieur modes d'opération et avec signalisation

(30) Priority: 22.12.1998 US 219087
(43) Date of publication of application: 28.06.2000
(73) Proprietor: Xerox Corporation, Rochester, New York 14644 (US)
(72) Inventor: Bobrow, Daniel G., Palo Alto, CA 94301 (US); Adler, Annette M., Palo Alto,CA 94301 (US); Theimer, Marvin M., Bellevue, WA 98006 (US); Fishikin, Kenneth P., Redwood City,CA 94063 (US); Marshall, Catherine C., Mountain View,CA 94040-2906 (US); Silverman, Alexander E., Menlo Park,CA 94025 (US)
(74) Representative: Grünecker, Kinkeldey, Stockmair & Schwanhäusser Anwaltssozietät

(56) References cited:
- EP-A- 0 840 248
- WO-A-94/10652

## Description

The invention relates to a scanning pen having multiple scanning modes, and more particularly to a scanning pen for use in an information management system having multiple modes adapted to scan and process different data types.

Today, the typical setting for a personal computer system is still an office. Since personal computers started becoming prevalent over twenty years ago, many of them have been used for such applications as word processing (and other document preparation), financial calculations, and other office-related uses. They have not permeated the home environment, other than for games and for displaced office-type work, because they are not simple to operate.

During that time, the primary user-interface paradigm for interacting with computers has been a keyboard-and-screen system. Although this arrangement has been improved and refined over the years, it is still essentially the same arrangement that has been used with computers for many years, and was used on remote terminals even before the advent of personal computers.

The keyboard-and-screen system presents several advantages. The keyboard typically used with computer systems is an inexpensive item to produce. It includes only around 100 key switches, signals from which are encoded and sent to the CPU. Also, it is only slightly modified from the version used on mechanical typewriter keyboards for over a century. Hence, it is familiar to most people. Moreover, typewriter-style keyboards (or variations thereof) are usable to unambiguously input information in most Western languages.

However, for most people, a keyboard is not an efficient form of input. To use a keyboard effectively, training is required. Even with the requisite training, time and effort is necessary to enter information via keyboard, particularly when the information sought to be entered is already evident in a document or some other communication from another. Moreover, they are sensitive to spelling errors, repetitive stress injury (such as carpal tunnel syndrome and tendinitis), and inconvenience. Both hands are needed to use a traditional keyboard with any speed.

The display screens, (or "monitors") typically used on personal (and other) computer systems have a number of advantages. They are relatively inexpensive. Years of producing television sets and computer monitors have resulted in manufacturing, and design efficiencies and improvements in quality.

However, even with their improvements, CRT-based display screens are still typically bulky, heavy, and energy inefficient. They also produce a relatively large amount of heat. For these reasons, CRT displays have not been integrated into many other environments, and computers (and their displays) are usually treated as stand-alone items. Other display technologies have been tried, including plasma displays and liquid crystal displays (LCDs), to name two, but have been less, successful because of their relatively high cost and low image quality in comparison to CRT displays. However, LCD prices have been dropping in recent years, and such displays are beginning to be found in a variety of applications.

While the keyboard-and-screen scheme for interacting, with computers has proven to be satisfactory in many ways for a long time, there are some problems that are not easily resolved with such a system. For example, there can be a lack of correlation between what is displayed: on the screen and what is entered on the keyboard. Any formatting information, available on the screen must be entered via sequences of keystrokes on the keyboard, and those sequences in many cases are not intuitive. Furthermore, many symbols and items viewable on the screen can not easily be entered via keyboard.

Recently, however, progress has been made in the usability of alternative user interface schemes. For example, touch-screen-based systems, in which a flat-panel display (such as an LCD) is overlaid with a translucent pressure-sensitive (or other type of touch-sensitive) surface, have been gaining in popularity. Such a system allows the user to directly manipulate the information that is shown on the display. For example, various gestures can be made on the surface to copy, move, annotate, or otherwise alter information on the display. Where such a system falls short, however, is in data input. Where there is no keyboard associated with a touch screen, then data must be input via interaction with the touch-sensitive surface. In some cases, this involves handwriting recognition, which is an imperfect and computationally intensive procedure, or some other means, such as "pressing" (with a stylus or fingertip) a visually displayed keyboard, or by special gestural symbols designed for data entry.

Voice recognition input has also made some progress in recent years. In the past, voice recognition systems have been used primarily in experimental environments. Typically, error rates were extremely high, and to accomplish real-time recognition, the computational resources required were prohibitively high. Recently, however, several commercial software products have made it possible to offer real-time voice recognition on personal computers of the type frequently used in the home. However, such voice recognition systems are speaker-dependent, and as such require a significant amount of training to attain a satisfactory level of performance and a low enough error rate. Moreover, when errors are made (such as in the recognition of homonyms and proper names), it is frequently more convenient to type the corrected word with a traditional keyboard than it is to correct the error by speaking the necessary voice commands and spelling the word for the system. Accordingly, voice recognition shows some promise for the future, but at the present time, is not a practical method of operating and providing input to a personal computer.

Despite promises of cross-platform integration (e.g:, computer and television, computer telephony), there is usually little relationship between the data on a personal computer and most of the documents and other tools used for communication and information exchange that are found around a typical individual, office, or family. For example, in a typical home or office, one might find a telephone, an answering machine (or voicemail system), audio equipment (such as a stereo), a fax machine, a television, a computer and printer, a whiteboard or a chalkboard, and various written notes, lists, calendars, mailings, books, and other documents. Unfortunately, the information in one or more of those repositories is usually tied to that repository. For example, addresses in a written address book are not easily used on a computer e-mail system, unless the user goes to the trouble of manually transferring the relevant information from the address book to the computer.

Furthermore, there is a well-known lack of compatibility between systems of different types, even those systems that are designed to work together. For example, in the conversion between one data format and another, there may be a loss of formatting or other information. Furthermore, errors may creep into the conversion, as when optical character recognition (OCR) is used to convert a printed document to a machine-readable one.

Because of these obstacles, the numerous disparate data types and formats persist in the home and office environments. For example, written notes on a family's refrigerator door are frequently a useful and convenient means of communication. The kitchen is often a place of gathering, or at least a place where each family member will visit several times every day. Accordingly, when one family member wishes to communicate with another that he might not see in person, then he might write a short note and post it to the refrigerator door with, for example, a magnet. Other documents, such as calendars, computer printouts, facsimiles, and collaborative lists can also be posted to the refrigerator door.

EP 0 840 248 discloses a scanning pen with the features of the preamble claim 1. The data interface is a telecommunications interface which directly connects the scanning pen to a telecommunications network.

WO 94/10652 discloses a scanning apparatus comprising a main electronics assembly with a processor and a data interface and a pen assembly with a line CCD, indicator LEDs and a button. The scanning pen may be used as a point-and-click bar code reader, a bar code scanner, a mouse or as a handwritten data or text data input device.

US 4,748,317 relates to an optical reader respectively a hand-held scanner is described, which is capable of reading both bar codes and alphanumeric characters using a single scanner unit. A switching gate comprised in the scanner determines whether the binary pattern seen by the scanner is derived from an alphanumeric character or a set of barcodes. After switching have been performed, the binary pattern is processed using either the character recognition circuitries or barcode recognition circuitries.

It is an object of the present invention to provided an improved scanning pen and a method for using it, which provide simplified input of data records. This object is achieved by a scanning pen according to claim 1 and by a method according to claim 8. Advantageous embodiments are subject matter of the dependent claims.

This invention builds upon the limited successes of prior systems in an attempt to create a comprehensive document handling system and method, useful in home and office environments, that is intuitive, easy to use, powerful, and relatively ubiquitous by way of its incorporation into other traditional channels of communication.

It requires no structural changes to its source documents, yet it is able, with minimal assistance, to extract information for use in an information database system. It is capable of accepting input from a large number of sources. To do this, the system and method of the invention rely upon the analysis of information from multiple sources, including, when necessary, limited user input The end result is a product that is usable in either digital or physical form, breaking down the barriers between the digital and physical document worlds, and allowing essentially all types of information to be exchanged with a minimum of difficulty.

The invention relies upon the recognition and analysis of document genre structure rather than content. The document genre guides the extraction of useful information, while reducing the need to recognize and parse each document in its entirety. This reduces errors and computational expense.

Accordingly, a moded scanning pen according to the invention, adapted for use in an information management system as described above, includes at least an on-board processor, an optical scanning head, a data interface, and an on-board user feedback device. The feedback device is tactile and might the additionally visual and/or audible. The pen has an active input mode selected from a plurality of possible input modes; the active input mode governs how the pen (or the system in which the pen is used) interprets scanned information, and is selected automatically according to the order in which data is scanned or according to characteristics of scanned data.
FIGURE 1 is a schematic diagram illustrating various exemplary physical components of a networked document processing and database system;
FIGURE 2 is a block diagram illustrating various exemplary functional components used in a network according to FIGURE 1;
FIGURE 3 is a block diagram providing a high-level functional overview of an information management system;
FIGURE 4 is a flow chart illustrating the steps performed in an exemplary calendaring system;
FIGURE 5 is a flow chart representing the steps performed in an automated input analysis step as performed in the method set forth in FIGURE 4;
FIGURE 6 is a flow chart representing the steps performed in a semi-automated input analysis step as performed in the method set forth in FIGURE 4;
FIGURE 7 is an exemplary school schedule capable of being processed by the calendaring system of FIGURE 4;
FIGURE 8 is an exemplary program schedule capable of being processed by the calendaring system of FIGURE 4;
FIGURE 9 is an exemplary school snack schedule including superfluous information capable of being processed by the calendaring system of FIGURE 4;
FIGURE 10 is an exemplary soccer game schedule capable of being processed by the calendaring system of FIGURE 4;
FIGURE 11 is an exemplary wedding invitation capable of being processed by the calendaring system of FIGURE 4;
FIGURE 12 is an exemplary electronic output calendar capable of being generated by the calendaring system of FIGURE 4;

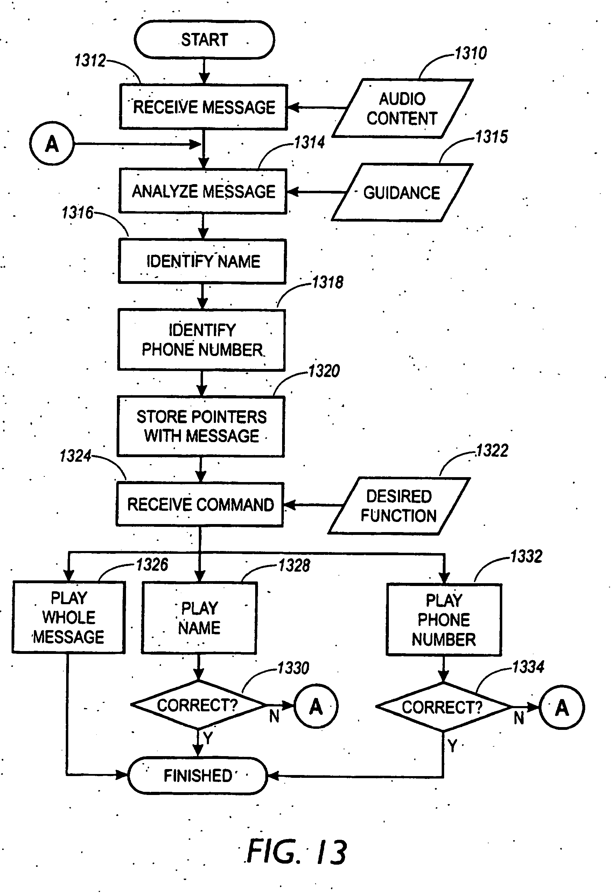

FIGURE 13 is a flow chart illustrating the steps performed in an exemplary telephone message processing system;

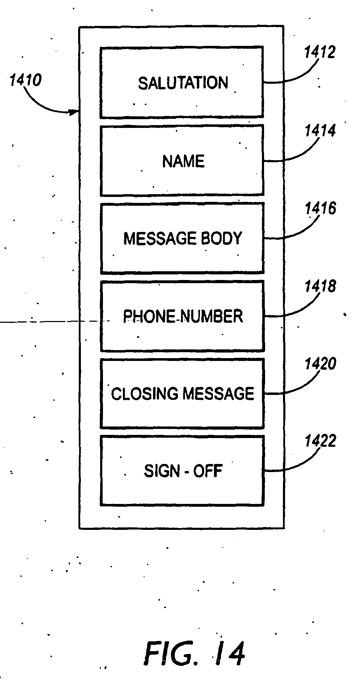

FIGURE 14 is a diagram illustrating the typical structure of a telephone message.

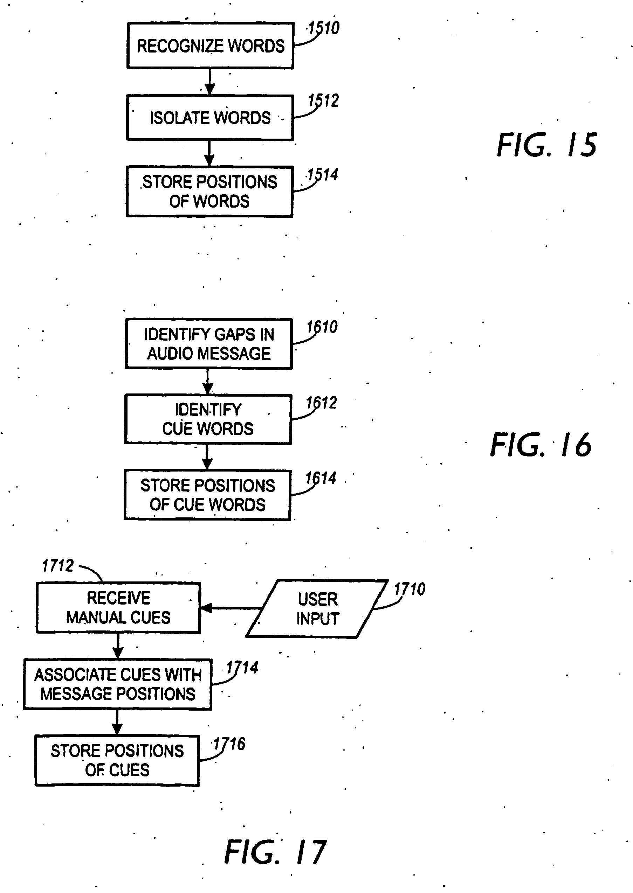

FIGURE 15 is a flow chart representing the steps performed in an automated message analysis step as performed in the method set forth in FIGURE 13;
FIGURE 16 is a flow chart representing the steps performed in a semi-automated message analysis step as performed in the method set forth in FIGURE 13;
FIGURE 17 is a flow chart representing the steps performed in a primarily manual message analysis step as performed in the method set forth in FIGURE 13;
FIGURE 18 is a diagram illustrating the typical structure of a spoken telephone number;
FIGURE 19 is a flow chart illustrating the input steps performed in an exemplary distributed genre document processing system;
FIGURE 20 is a flow chart illustrating the output steps performed in an exemplary distributed genre document processing system;
FIGURE 21 is a diagram illustrating the typical structure of a spoken or written date;
FIGURE 22 is a diagram illustrating the typical structure of a spoken or written time of day;
FIGURE 23 is a diagram illustrating the typical structure of a location or address;
FIGURE 24 is a functional block diagram illustrating the components of an exemplary moded scanning pen according to the invention;
FIGURE 25 is a visual representation of an exemplary moded scanning pen according to the invention having a first form factor;
FIGURE 26 is a visual representation of an exemplary moded scanning pen according to the invention having a second form factor;
FIGURE 27 is a visual representation of an exemplary mode book for use with a moded scanning pen according to the invention;

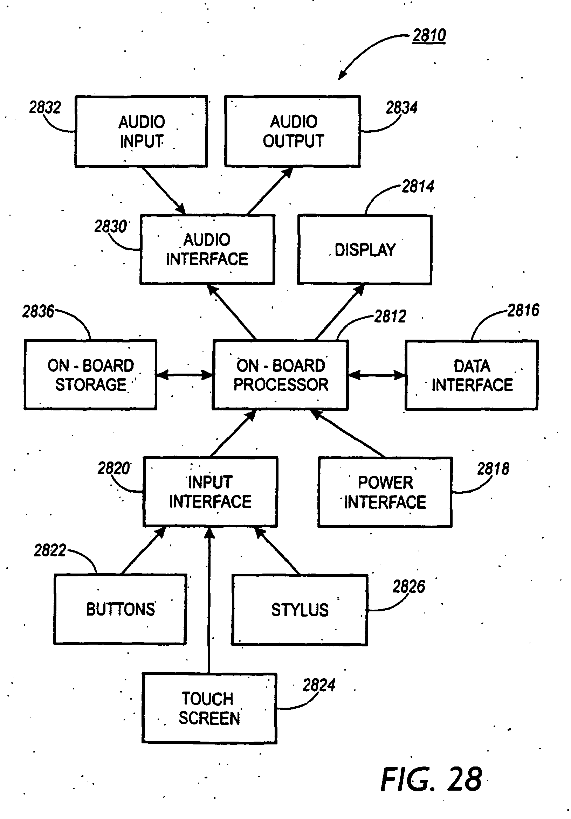

FIGURE 28 is a functional block diagram illustrating the components of an exemplary parasitic user terminal;

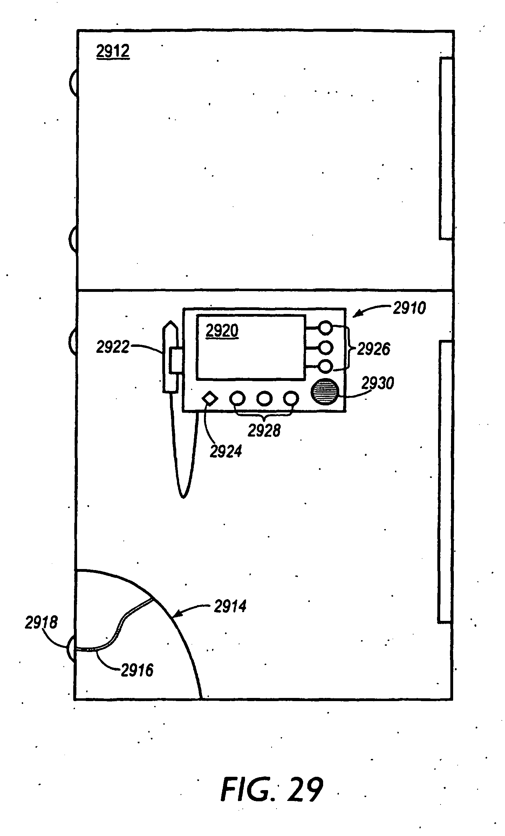

FIGURE 29 is a visual representation of the parasitic user terminal of FIGURE 28 mounted to a host refrigerator; and

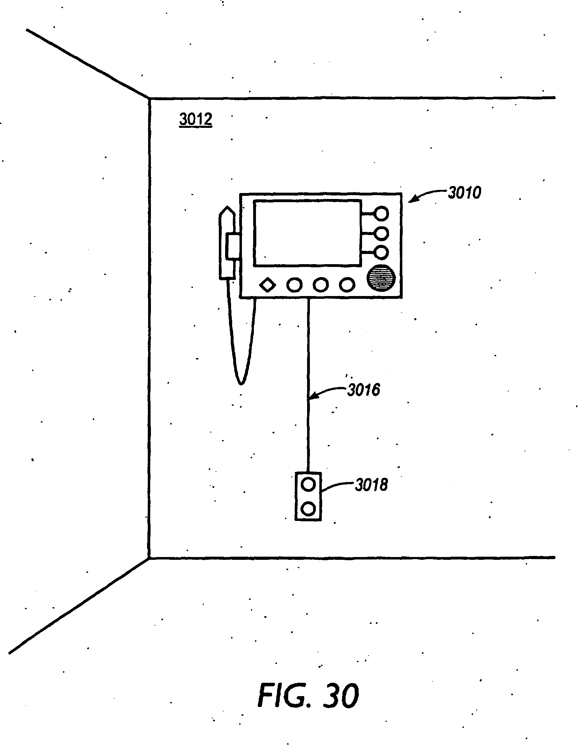

FIGURE 30 is a visual representation of the parasitic user terminal of FIGURE 28 mounted to a wall.

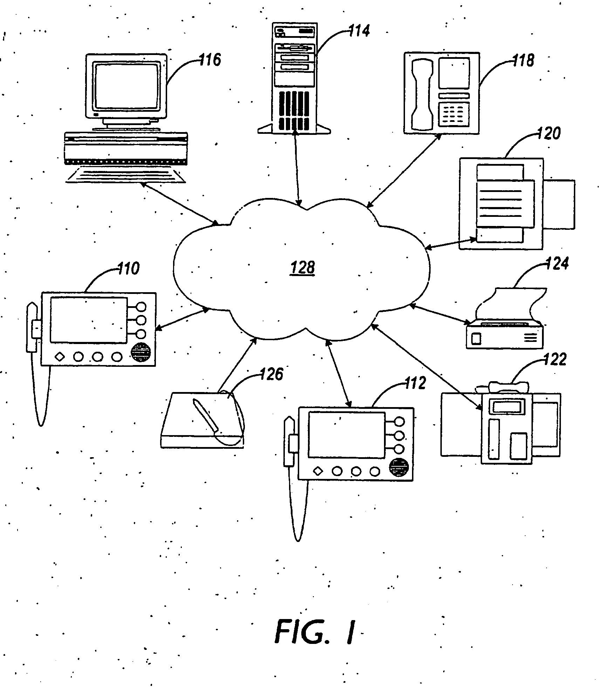

Referring initially to Figure 1, a distributed network for information management and sharing according to the invention is shown in schematic form. As will be described in further detail below, the present invention is adapted to facilitate the extraction and use of significant information in documents of many kinds, including (but not limited to) papers, handwritten notes, business cards, e-mail messages, audio messages, and the like, without any appreciable advance knowledge of the content or format of the documents, but with some knowledge of the "genre" or context of the documents. As will be apparent from the description below, the system is adapted for distributed access and either centralized or distributed processing.

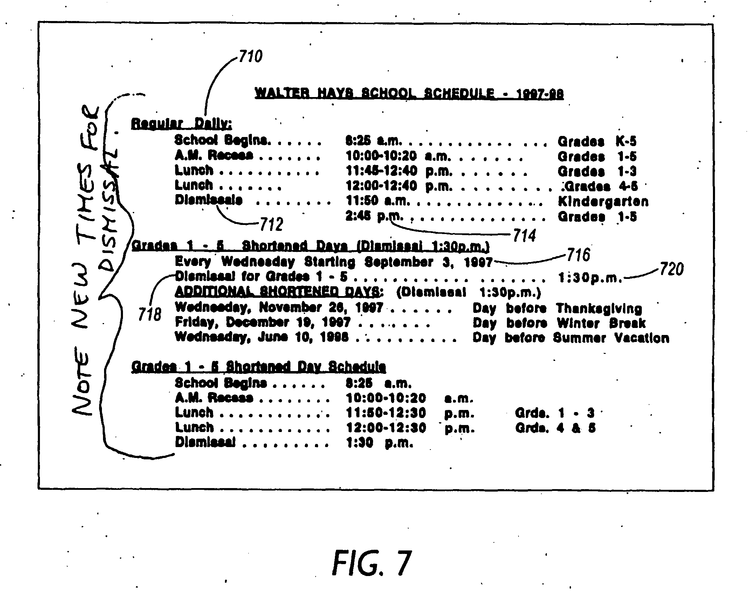

As used herein, the term "document" refers to any persistent communication or collection of information, whether fixed in a tangible medium (such as a hardcopy) or stored electronically, and whether in machine-readable or human-readable form. A document "genre" is a culturally defined document category that guides the document's interpretation. Genres are signaled by the greater document *environment* (such as the physical media, pictures, titles, etc. that serve to distinguish at a glance, for example, the National Enquirer from the New York Times) rather than the document *text.* The same information presented in two different genres may lead to two different interpretations. For example, a document starting with the line "At dawn the street was peaceful ..." would be interpreted differently by a reader of Time Magazine than by a reader of a novel. Below (and in conjunction with Figs. 7-12), a variety of calendars will be discussed; each one represents a different instance of the calendar genre. As will become clear from the discussion below, each document type has an easily recognized and culturally defined genre structure which guides our understanding and interpretation of the information it contains. That structure is used as the basis of certain aspects described herein below.

Two user terminals 110 and 112 each with a flat-panel display, a remote CPU 114, a traditional personal computer 116, a telephone device 118 with integrated telephone answering device (TAD) functionality, a document scanner 120, a fax machine 122, a printer 124, and a handwriting input tablet 126 are all coupled to a communications network 128. The network 128 may be any type of known network, such as an Ethernet local-area network (LAN), a wireless LAN (either RF or infrared), a wide-area network (WAN), or even the Internet. Moreover, the network 128 may comprise only the illustrated devices, connected in a peer-to-peer topology, or may include numerous other disparate devices, whether or not designed to operate with the present invention. As will be appreciated by individuals of skill in the art, numerous other network topologies and protocols may be used in an implementation of the current invention without departing from its scope. However, the functional interoperation of the illustrated devices will be considered in detail below.

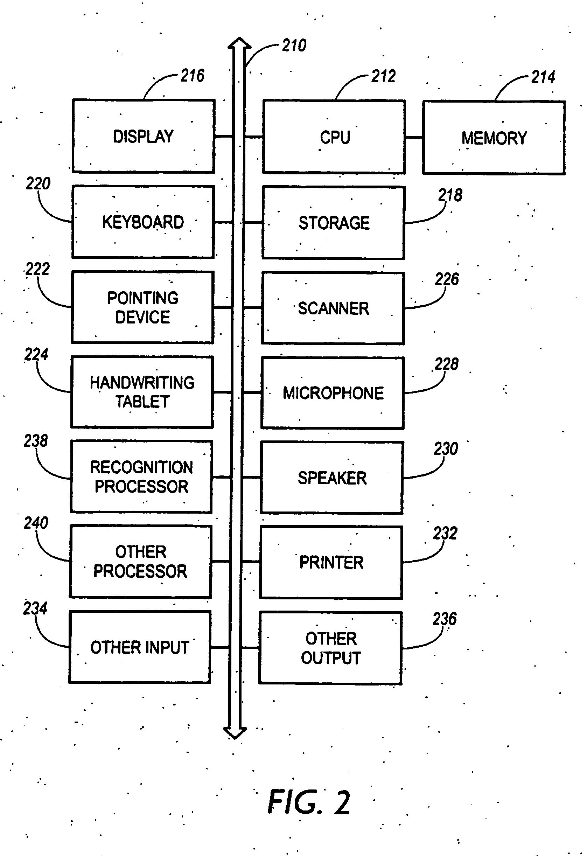

Figure 2 is a functional block diagram illustrating the functions performed by the physical components set forth in Fig. 1. The network 128 (Fig. 1) is provided in the form of a bi-directional communications link 210, to which a central processing unit (CPU) 212 and memory are attached. The CPU 212 is adapted to perform most of the invention's processing, but it should be noted that in an alternative embodiment of the invention, processing may be distributed over the network 128. Preferably, the CPU 212 is attached to a memory 214, which may be used to store, among other things, genre specifications used in document analysis (explained below), character models used for character recognition, voice models used in speech recognition, and other data used by the system.

A display 216 is also provided; it may be local to or remote from the CPU 212, and may be able to decouple from the network 128 for portability (as in a Personal Digital Assistant or PDA). An exemplary embodiment of the display 216 will be described in further detail below. Long-term storage 218 for the information database of the invention, which stores, document information for later use, is also provided and connected to the communications link 210. Various input devices are attached to the link 210, including a keyboard 220, a pointing device 222 (such as a mouse, trackball, or light pen), a handwriting tablet 224, and a scanner 226. These devices are adapted to receive information and transmit it to the CPU 212 for processing.

It should also be recognized, however, that certain document types need not enter the system through any of the foregoing input devices. For example, an e-mail message received by the PC 116 need not be converted into the digital domain, as it is already in electronic form. The same is true for facsimile message; however, the latter may still need to be converted from a bitmap into a machine-readable code.

An audio interface, including a microphone 228 and a loudspeaker 230, facilitate the entry and use of audio documents (such as recorded memos). As suggested by Fig. 1, the microphone 228 and loudspeaker 230 may be integrated into a telephone device 118 or any other convenient apparatus attached to the network 128.

A printer 232 is provided for hardcopy output. It should be recognized that the foregoing input and output devices are exemplary only, and numerous other input devices 234 and output devices 236 may be used in accordance with the invention. Moreover, additional processors, such as a recognition processor 238 or any other processor 240 may be used to off-load some of the computational burden from the CPU 212. It is contemplated that the recognition processor. 238 would be used to process audio from the microphone 228, handwriting from the tablet 224, or printed documents from the scanner 226, for example. In each case, the raw input would be translated to a machine-readable counterpart (e.g., speech would be converted to recognized text via a speech recognition algorithm, handwriting would be converted to recognized text or command gestures via a handwriting recognizer; or printed documents would be converted from a bitmap to text via optical character recognition).

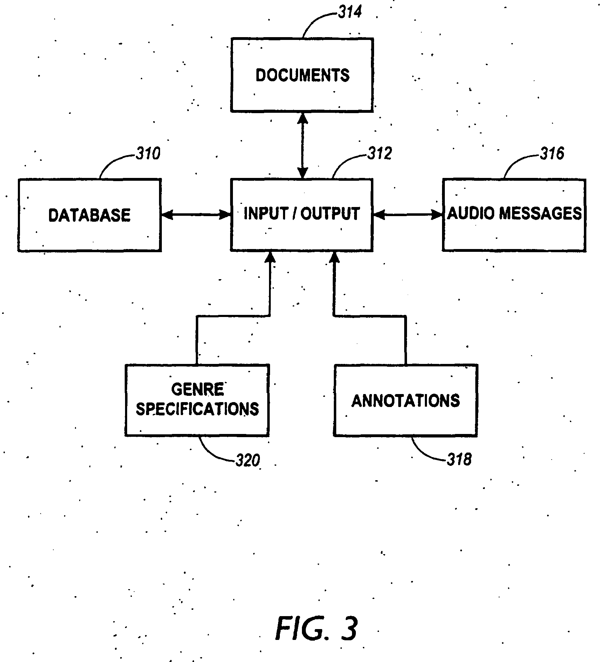

The basic function of the overall system is illustrated by the block diagram of Figure 3. A database 310 (preferably hosted by the storage 218 and managed by the CPU 212 of Fig. 2) serves as a repository of document information, specifically that information which has been deemed to be significant in documents processed by the system, and is coupled to an input/output subsystem 312, functionally illustrated in Fig. 2 above. The input/butput subsystem 312 may include some or all of the display 216, the keyboard 220, the pointing device 222, the handwriting tablet 224, the scanner 226, the microphone and speaker 228 and 230, the printer 232, other input and output devices 234 and 236, as well as the logic used to control those devices, including the recognition processor 238, any other processor 240, and certain functions of the CPU 212. The input/output subsystem 312 is capable of handling documents 314, audio messages 316, and annotations 318, in accordance with detailed methods set forth below.

Input to and output from the database 310 are processed by the system with the assistance of guidance provided by a set of genre specifications 320 (preferably stored within the memory 214 of Fig. 2). The genre specifications 320 provide information on the expected nature, structure, and content of documents handled by the system. In particular, for input documents, the genre specifications 320 preferably indicate where certain data items are likely to be found within a document, the format of those data items, and other considerations of utility in the information extraction process. With regard to output documents, the genre specifications preferably indicate how to assemble data from the database 310 into human-readable documents in a manner consistent with what the user expects. The mechanics of this interaction will be considered below with reference to several detailed examples.

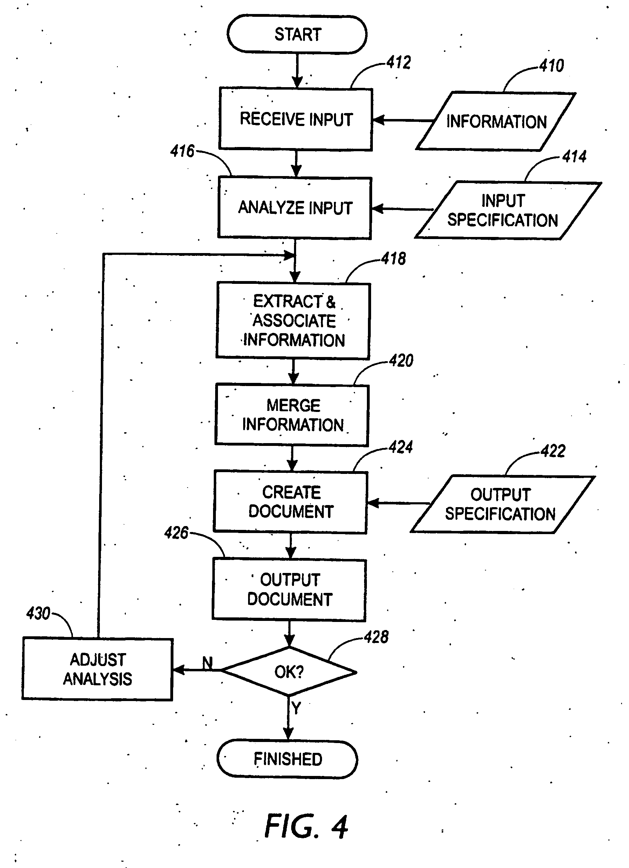

A specialized application of the general system of Figs. 1-3 is set forth and illustrated in Figure 4. Figure 4 represents the processes performed in a system adapted to extract appointment and other date/time information from various documents and inputs to the system, and to synthesize a calendar from the information then stored in the database 310 (Fig. 3).

Date and annotation information 410, stored as part of a calendar document, is an input to this method, which begins by receiving the date and annotation information (step 412). As suggested above, this input can occur in any of a number of ways: by scanning one or more paper documents with a sheet-fed scanner or a scanning pen, by selecting certain e-mail messages or Web pages for processing, or by providing an audio recording of a voice message, for example. A collection of one or more source documents is provided to the system. Consequently, the source documents can be, for example, paper or other physical documents, or can also be "raw bits," such as unrecognized image or speech data, or formatted data, such as ASCII or HTML. Each source document is assumed to represent a genre structure recognizable by the system. Each source document is further assumed to contain one or more key pieces of information, each such key being associated with a message that the user (or another person) would find significant. For example, if the genre is associated with a particular sort of calendaring event (such as a schedule) then the keys can be dates or times, and the messages can be announcements of scheduled events corresponding to these dates or times.

Typically, and importantly for the average user, the source documents are provided to the system in physical rather than digital form. In this case, the system captures the documents and converts them to digital form. For example, a paper document can be optically scanned by a whole page scanner or a scanning pen to produce unrecognized image data, which can then be further converted as by segmentation, optical character recognition (OCR), sketch analysis, and the like. An audio recording can be digitized and, if the recording contains speech, the speech can be recognized by a speech recognizer. Depending on the particular system, the documents may include data in any number of forms, such as textual, graphic, pictorial, audio, or video data. Streaming and static data are both acceptable. The greater the system's ability to accept physical rather than digital documents as input, the better it can integrate seamlessly with everyday practice.

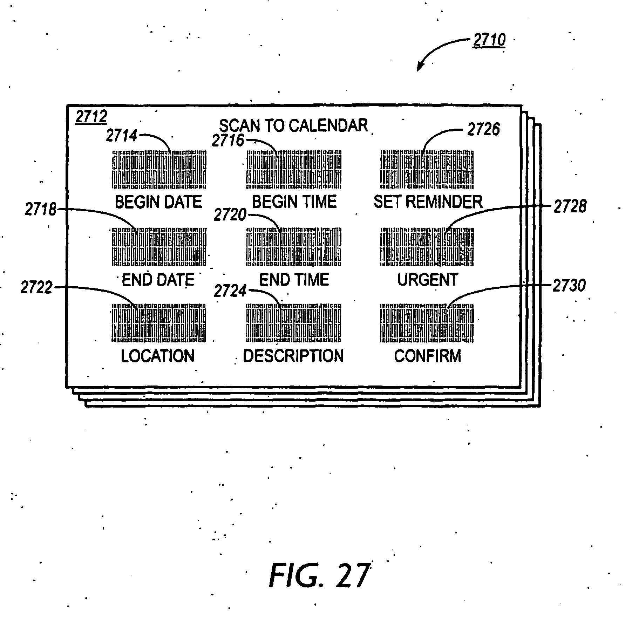

At the time of document input, the genre of the document input is determinate, and is observable by the user. The document's genre is used to select a particular input specification 414, which is used to assist further processing of the input document. As will be appreciated by individuals of skill in the art, various means of specifying an input genre are possible; one exemplary method is described below with reference to Fig. 27. Moreover, the system may be programmed to expect documents having a particular genre. It is also possible for a system according to the invention to attempt to heuristically determine the genre of an input document without further user input. This is particularly possible when documents of different types and genres are being received from different sources (e.g., e-mail messages might usually have a certain genre, while facsimile messages might have a different usual genre).

For example, a particular input document may represent the genre of calendars. The characteristics of this genre are indicated by the selected input specification 414, chosen from a library of possible genre specifications. While, in general terms, a system according to the.invention is able to process many different document genres, it is important to note that a single instance of the system may be equipped to only process a single genre type, such as calendars. Even so, there may be many different kinds of calendars, such as schedules, appointment books, and the like (some of which will be discussed in further detail below), all of which may be defined by a single input specification 414 or, if necessary, by multiple input specifications. For purposes of this discussion, all documents within the calendar genre are considered to have similar structures, including the key information set forth above.

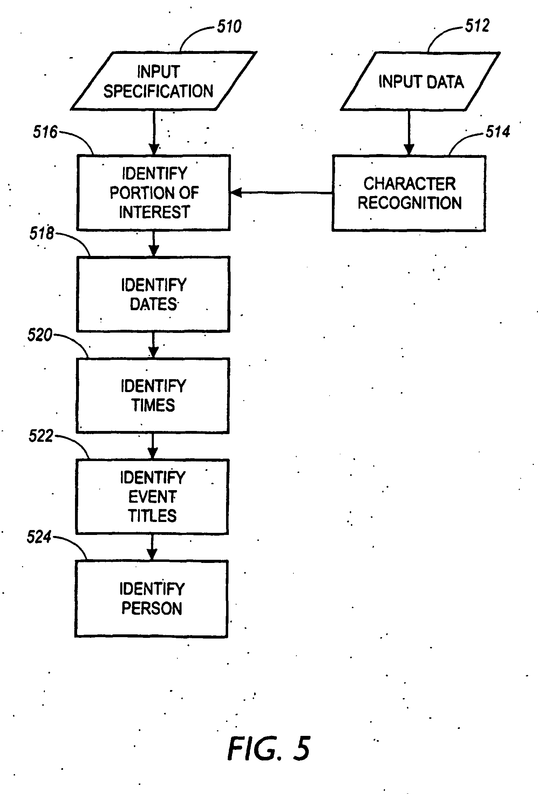

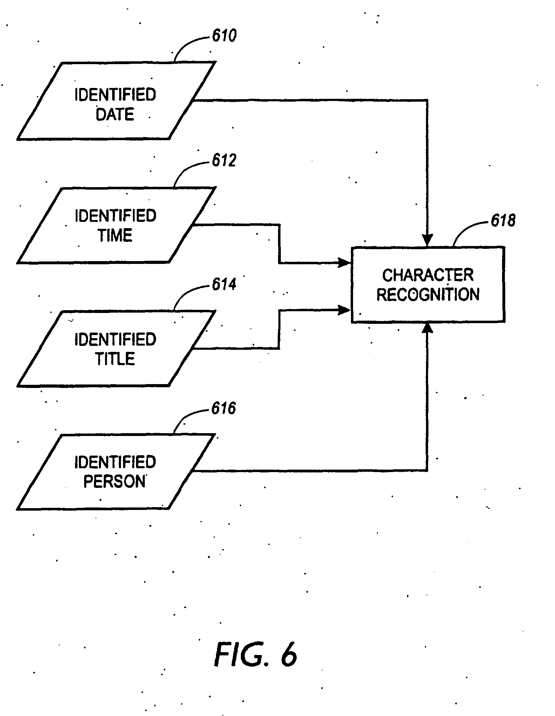

The input specification 414 is employed to analyze the input (step 416) and identify information of interest. This operation may occur automatically (see Fig. 5) or semi-automatically (see Fig. 6) with some user interaction. The identified information (which for the calendar genre typically includes at least a date, a time, and an event title) is then extracted and associated (step 418) into a record corresponding to a single event. The record is then merged (step 420) into the database 310 (Fig. 3).

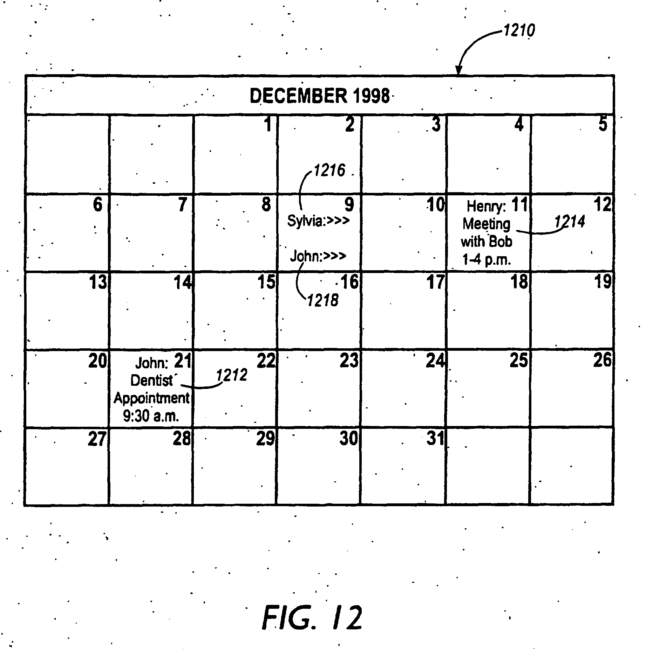

Alternatively, and preferably, the entire input document (or as much as is available) is merged into the database 310 and is indexed and referenced by its extracted records. This facilitates the ability to "look behind " the extracted event for additional information, if it proves to be necessary or desirable to do so. For example, an exemplary output calendar (see Fig. 12) may contain only a summary of information obtained from one or more input documents. When this is the case, the user can be given the opportunity to "select" an event, thereby revealing further information, possibly including a digitized bitmap of the entire input document from which the event was extracted. ' This capability provides an useful safeguard, reducing the possibility (and impact) of an error by the system.

When the user wishes to create output, an output specification 422 is selected. The output specification identifies and describes the characteristics of the user's desired output genre. For example, the user may wish to create a monthly calendar containing all family events for the month of December, 1998. The output specification 422 fully describes the format of that document, but does not contain any of the information from the database 310. Accordingly, the document is created (step 424) from the information in the database,310 and the output specification 424 and is outputted (step 426) to the user.

Given the automatic or semi-automatic processing of document information, it is entirely possible that the system failed to correctly identify the proper dates and times, for example. Accordingly, the user is given an opportunity to review the output document and to indicate to the system whether it is correct (step 428). If not, the analysis is adjusted (step 430), and information is extracted once again. As will be appreciated by.individuals of ordinary skill in the art, this can be accomplished by several means, including but not limited to adjusting the parameters used to perform the analysis, by reverting to alternate choices in a weighted list of possibilities, or by accepting user guidance. To facilitate changing the analysis, it is contemplated that the database 310 continues to contain full document instances, in addition to the analyzed information derived in steps 416-418. Although the adjustment step 430 is presented herein as occurring after output has been generated, it should be noted that adjustment by any of the means set forth above can occur in any step of the process, for example immediately after character recognition is performed, or before the information is stored in the database.

Figure 5 illustrates the process followed by an automatic version of the input analysis aspect of Fig. 4. Beginning with an input specification 510 and input data 512, character recognition (step 514) is performed on the input data 512, if necessary to translate the document into a machine-readable format.

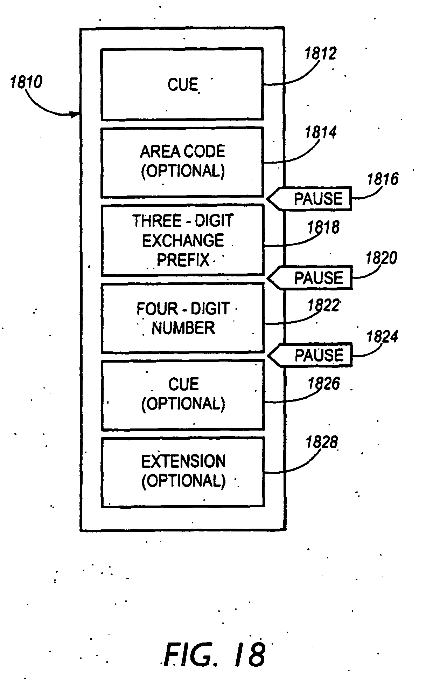

From the recognized, input, the portions of interest are identified (step 516). As will be appreciated by individuals of skill in the art, there are many ways to accomplish this; one method includes simply scanning for numerals, while another method scans for all potentially relevant types of information, such as numerals, names of months, names of days of the week, the phrase "o' clock," etc. From the portions of interest, the system then extracts the necessary dates (step 518), times (step 520), and event titles and other annotations (step 522), and if necessary, the applicable person (step 524). Dates and times, in particular, have reasonably well-defined structures that assist the system in identification. These characteristics will be discussed in further detail below (see Figs. 18, 21, 22, and 23). In a household or business, names might also be readily identifiable (for example, by checking against a list of valid names).

Referring now to Figure 6, which illustrates a semi-automatic version of the input analysis step of Fig. 4, a date 610, a time 612, an event title 614, and a person 616 are all identified by the user. Then, to facilitate extraction and indexing into the database 310 (Fig. 3), character recognition 618 is performed on the date 610, time 612, title 614, and person 616.

Clearly, in any particular document, at least one of the foregoing data items may not be present; for example, in a calendar might not include a time for an all-day event. In this case, the system may allow for the manual input of the omitted data item, or may alternatively continue to operate without it. As will be discussed in further detail below, the user identification of the data items 610-616 may operate by writing guiding annotations on a hardcopy document (which is then scanned), by using a scanning pen to input data fields in succession, or by any other similar method. In a more automatic alternative embodiment, user identification only requires "pointing at" a particular item; the system then uses character or pattern recognition to determine the extent of the written data field.

The manual input called for above may be accomplished via a keyboard, handwriting recognition, or simple selection of options via a pointing device, as circumstances require.

A detailed example of the calendaring system in operation will now be presented. It shows how a user can use one particular input mechanism, in this case a smart scanning pen (one embodiment of which will be discussed in further detail below), to analyze structure and merge calendar data from a variety of document genres. Note that as discussed above, a scanning pen is not the only possible means of input. Rather, the scanning pen is used for ease in describing the invention, which deals more with the source documents once they have been acquired.

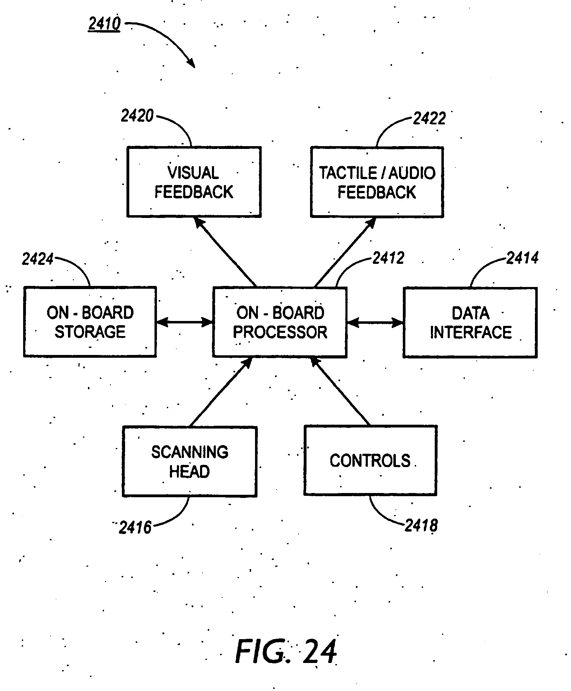

In the particular embodiment described in this section, the user interacts with a smart scanning pen augmented with a single button or any other user control (one embodiment of which is illustrated in Fig. 24) - this button, when clicked, indicates to the system that a new appointment is being entered. The user's primary interaction with the scanning pen, once the button has been clicked, is to perform a series of "swipes" with the scanning pen across the surface of the document. Each such swipe yields a bitmapped portion of a text page. This bitmapped portion is then analyzed and converted to digital text via optical character recognition (either on the pen itself, as part of the transfer to the system, or possibly later in the process by another component of the system), and analyzed with genre-specific heuristics.

The set of scanned events is transferred from the pen's local storage to the calendar system. A variety of standard mechanisms are available to accomplish this. In one embodiment of the invention, the scanning pen bears an infrared (IR) transmitter near the end farthest from the scanning tip. When the pen is "flicked" (or quickly pointed) in the direction of a host coupled to the network 128, the information is transmitted to the host (which must have an IR receiver ready to receive said information). Less exotic solutions are also possible, including but not limited to a docking station or even a serial cable.

An example of the scanning pen in use in the calendaring system operating as set forth in Fig. 4 is provided below. A click of the pen's button is indicated with the symbol CLICK, and a swipe of text is indicated by enclosing the text in double-quotes.

An exemplary school schedule is shown in Figure 7. Note that the structure is of the schedule is self-apparent: it is a schedule of times when something (in this case school) is "on" and times when it is "off". Several additional refinements of this structure are present, including the application to particular subgroups (e.g., grades 1-3) or particular ways of being "off" (e.g., holidays). Suppose that a user wishes to enter the daily dismissal times into the system. Then an exemplary scanning sequence to accomplish this could be:
- CLICK
- "Regular Daily" (710)
- "Dismissals" (712)
- "2:45 PM" (714)
- CLICK
- "Every Wednesday Starting September 3, 1997" (716)
- "Dismissal for Grades 1-5" (718)
- "1:30 PM" (720)

From the first swipe 710, "Regular Daily," the system can determine that the time of the appointment recurs daily - that time, furnished in the third swipe 714, is 2:45 PM. The system treats the second swipe 712 as an annotation for the event, as its data is not recognizable as either a date or a time.

From the fourth swipe 716, the system can determine the frequency and day of the second appointment. The fifth swipe 718 annotates that appointment, and the sixth and final swipe 720 provides the recurring time.

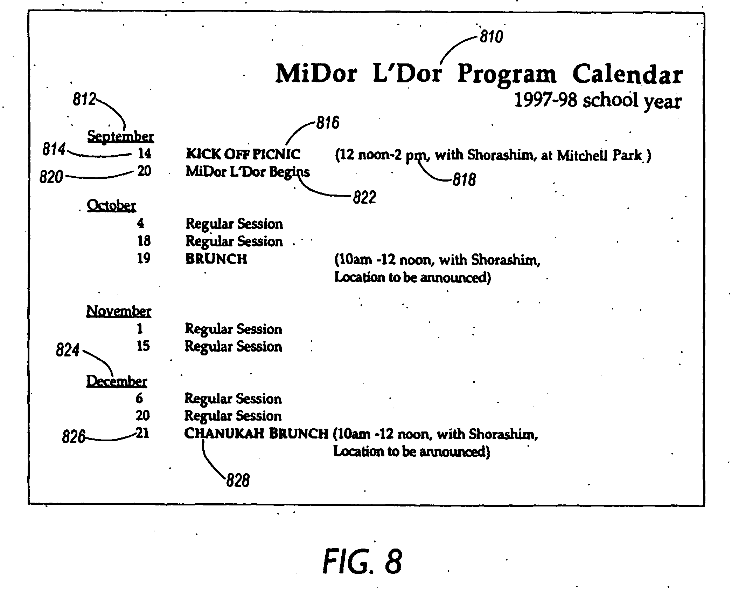

Figure 8 illustrates an exemplary program calendar. This type of calendar is similar to the school example above (Fig. 7) in that it sets forth another schedule, this time oriented around the 12-month calendar rather than canonically. Suppose that the user wishes to enter into the system both events for September 816 and 822 and the Chanukah brunch 828 in December. A scanning sequence to accomplish this could be:
- CLICK
- "MiDor L'Dor" (810)
- "September" (812)
- "14" (814)
- "KICK OFF PICNIC" (816)
- "12 noon-2 pm, with Shorashim, at Mitchell park" (818)
- CLICK
- "20" (820)
- "MiDor L'Dor begins" (822)
- CLICK
- "MiDor L'Dor" (810)
- "December" (824)
- "21" (826)
- "CHANUKAH BRUNCH (10am -12 noon, with Shorashim," (828)

In the first swipe sequence, swipes 812, 814, and 818 contain date/time information, and are analyzed accordingly. Swipes 810 and 816 don't, and so serve to annotate the event.

In the second swipe sequence, the only date information is contained in swipe 820, "20". This is an incomplete portion of a date, so the month and year are carried over from the previous event. Swipe 822 serves to annotate the event.

In the third swipe sequence, swipes 824, 826, and 828 contain the date information. Swipes 810 and 828 contain other information, and so annotate the event. Note that swipe 828 contains both date and annotation information.

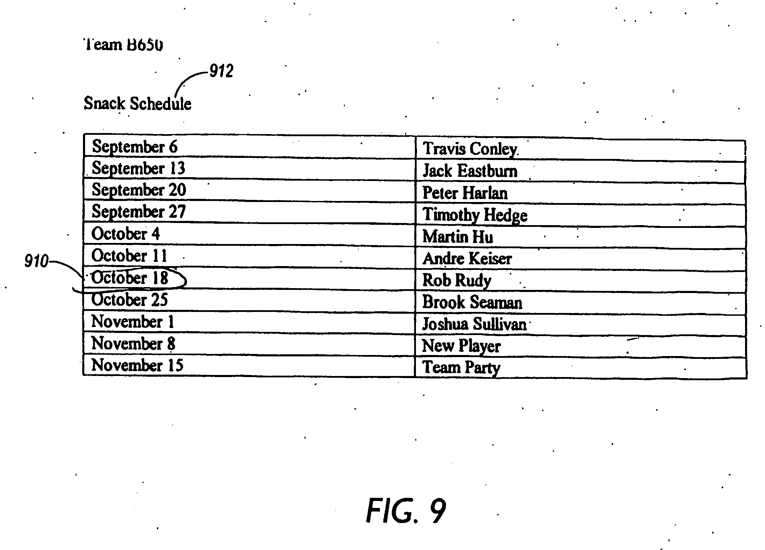

The third calendar type, a snack schedule, is shown in Figure 9. This, once again, is similar to the other schedules (Figs. 7-8); the difference here is that only one entry is relevant to the user (the date of a particular person's snack assignment). Suppose that the user wishes to enter the October 18. event. A scanning sequence to accomplish this could be:
- CLICK
- "October 18 Rob Rudy" (910)
- "Snack Schedule" (912)
As in the previous example, one swipe 910 contains both date and annotation information. The second swipe 912 contains only annotation information. Hence, the event will be entered with a date of October 18, and with an annotation of "Rob Rudy, Snack Schedule."

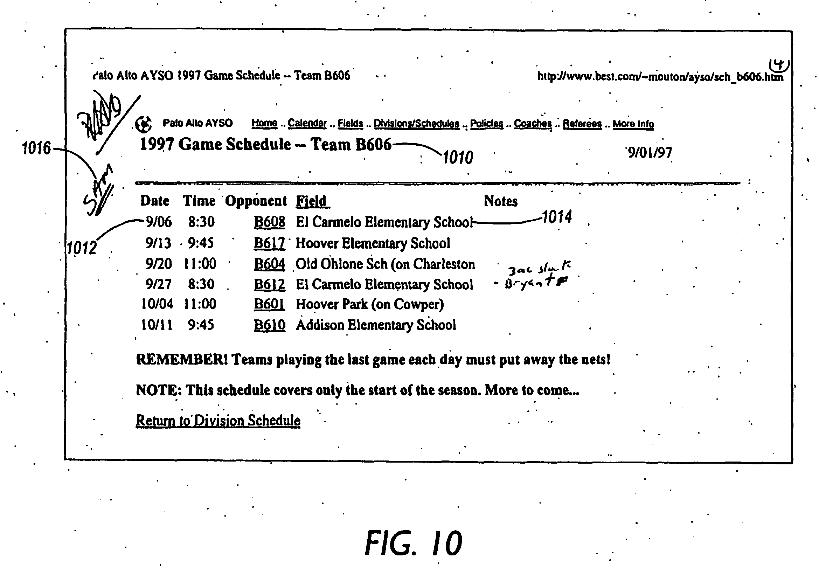

A fourth calendar type, a web page, is shown in Figure 10. This is still a schedule, but one kept primarily in the digital domain (though it can be printed in hardcopy format). Suppose that the user wishes to enter the September 6th event. A scanning sequence to accomplish this could be:
- CLICK
- "Game Schedule - Team B606" (1010)
- "9/6 8:30" (1012)
- "El Carmelo Elementary School" (1014)

The second swipe 1012 serves to completely specify the date - the other swipes 1010 and 1014 serve as annotation. Like other events, it is possible that the user may wish to add additional annotation beyond that already printed on the document - for example, in this case, directions to the school, or which child is on team "B606", and so forth. This can be either done later in the process through the system's user interface (e.g., one of the terminals 110 or 112 of Fig. 1), or, in an alternative embodiment, by allowing the scanning pen to write as well as read - the user writes additional "swipe" text himself.

As shown in Fig. 10, the name "Sam" 1016 is handwritten on the calendar. In an embodiment of the invention, a handwritten note like this one can be used to further annotate the record of the September 6 game. Preferably, the scanning pen used to input the other data on the calendar of Fig. 10 is also able to write on a hardcopy document (while simultaneously recording the physical gestures that make up the handwritten note), or to "mark up" a digital document such as a Web page. Alternatively, a previously-handwritten note can be scanned and digitized with a swipe of the scanning pen. In either case, this handwritten information, after being converted to a machine-readable format via handwriting recognition or some other means of parsing gestural symbols, is associated with the scanned record and stored in the database 310 (Fig. 3).

When the pen is used to "mark up" a digital document, it should be noted that there is no need for the pen to actually scan any information in the underlying digital document, as the document is already in the digital domain. Rather, it is sufficient for the scanning pen to indicate to the system the location of each swipe, from which the underlying information can be extracted.

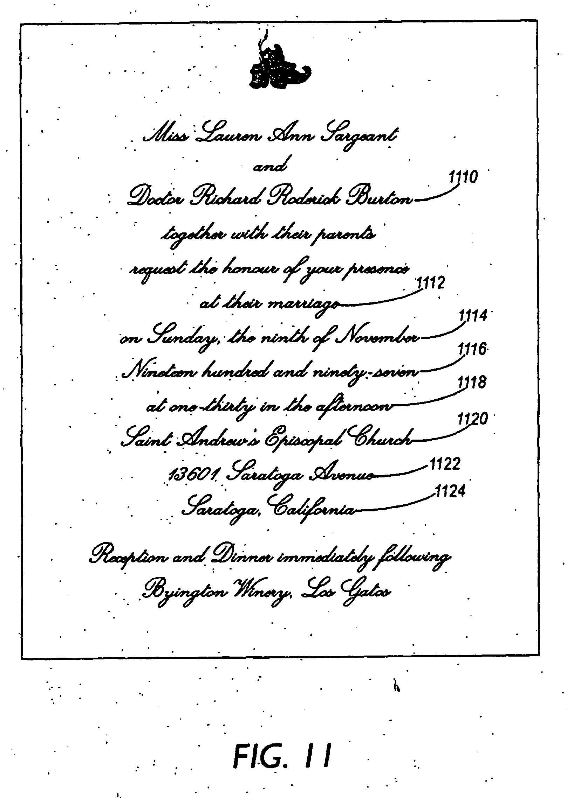

The fifth calendar type, a wedding announcement, is shown in Figure 11. Suppose that the user wishes to enter the event into the system. A scanning sequence to accomplish this could be:
- CLICK
- (23) "Doctor Richard Roderick Burton" (1110)
- (24) "marriage" (1112)
- (25) "Sunday, the ninth of November" (1114)
- (26) "Nineteen Hundred and ninety-seven" (1116)
- (27) "at one-thirty in the afternoon" (1118)
- (28) "Saint Andrew's Episcopal Church" (1120)
- (29) "13601 Saratoga Avenue" (1122)
- (30) "Saratoga, California" (1124)

Swipes 1114, 1116, and 1118 specify the date and time of the event. Swipes 1110, 1112, 1122, and 1124 serve to annotate the event. The address is set forth in swipes 1120, 1122, and 1124 - this information can remain part of the annotation or can be extracted by the system as described below. Note that this further information can be displayed in a hierarchical fashion, concealing details until needed. Moreover, in one embodiment of the invention, the entire announcement of Fig. 11 (or at least an additional portion thereof) is scanned and stored as an image in the database 310 (Fig. 3) in addition to the information extracted and used as an event annotation as set forth above. This approach has the advantage that additional information in the document (such as the bride's name, for example) is accessible and can be made available, if necessary, even if it is not expected to be needed at the time the key data items are extracted.

An exemplary output calendar based on information derived from Figs. 7-11 is set forth below. As discussed above, the format of this calendar is described by an output specification 422 (Fig. 4), and can be changed dependent on the user's preferences and on the desired level of detail.

| September 1997 | |
|---|---|
| 6 | [8:30 a.m.] Game Schedule - Team B606 |
| | (El Carmelo Elementary School) |
| 14 | MiDor L'Dor KICK OFF PICNIC |
| | (12 noon-2 pm, with Shorashim, at Mitchell Park) |
| 20 | MiDor L'Dor Begins |

| October 1997 | |
|---|---|
| 18 | Rob Rudy, Snack Schedule |

| November 1997 | |
|---|---|
| 9 | [1:30 p.m.] Marriage |
| | Doctor Richard Roderick Burton Saint Andrew's Episcopal Church |

| December 1997 | |
|---|---|
| 21 | MiDor L'Dor CHANUKAH BRUNCH |
| | (10am-12 noon, with Shorashim) |

Note that some of the entries, such as the October 18 entry ("Rob Rudy, Snack Schedule"), are annotated with all available information. That is all information extracted from the source document is available in this output calendar. However, in an alternative embodiment of the invention, the entire source document is digitized and stored in the database 310, and is hence available for viewing, for example by selecting a hyperlink associated with the entry in a digital form of the output calendar. In contrast, some of the entries, such as the November 9 entry ("Marriage"), have only some of the scanned information visible, In the November 9 entry, for example, the address of the church is omitted. Again, in a digital form of the output calendar, the additional annotations (or even a view of the entire input announcement) may be made available to the user via selectable options. Note further that some of the events (i.e., the events September 6 and November 9) have an associated time. The time is set forth in the manner defined by the output specification 422 (Fig. 4); some output calendars may omit this information, if desired.

Referring now to Figure 12, a different exemplary output calendar 1210 is presented in grid format; this format is also specified by an output specification 422 (Fig. 4). The calendar 1210 is of a type that might be displayed on a terminal 110 (Fig. 1); it is contemplated that hardcopy calendars, like the one set forth above, would contain more information. In particular, the calendar 1210 represents a sample monthly calendar for a family that includes at least three family members: John, Henry, and Sylvia. A dental appointment 1212 for John is shown on December 21, 1998. The display shows John's name, the event title, "Dentist Appointment," as well as the time for the appointment, "9:30 a.m." The date, however, is illustrated by the placement of the appointment 1212 on the calendar 1210. Similarly, a meeting 1214 for Henry is shown on December 11; it has a start time (1:00 p.m.) and an end time (4:00 p.m.). On December 9, two appointments are shown, a first appointment 1216 for Sylvia and a second appointment 1218 for John. Because of limited space, the symbols ">>>" indicate that more information is available; the additional information may include information on the event title, the time, etc. Because the calendar 1210 is contemplated to be displayed electronically, the user is able to select either appointment 1216 or 1218 to view the additional information. In a hardcopy version of the same calendar, the additional data should be made available.

A document, whether in physical or digital form, has a genre, which exists only within and relative to a social context. The notion of genre can be generalized, and in so doing, powerful new computational systems can be created.

Consider, for example, a collection of pre-existing input documents that includes documents from a plurality of different genres and potentially from a variety of different media. Each document in the collection includes various pieces of information. Furthermore, some coherent subset of these pieces of information, distributed across the various genres, may form a consistent and coherent genre on its own, which can be synthesized and merged into a new document. This new document is of use to a particular user (or groups of users) for a particular purpose, typically at a particular time. The ways in which the pieces are combined can be a function of the reader(s), purpose, and time. Moreover, this new document has its own genre, and the way in which the pieces of information are combined into the new document depends on that genre.

This generalization and new conceptualization allows the consideration of a database system. Such a database system would facilitate the automated or semi-automated recognition of the appropriate pieces of significant information in input documents, extract these pieces from the documents, and merge or synthesize them into a unified computational representation or database. The computational representation can then be used to generate (re-present) an output in human-readable form (e.g., a digital display or physical printout) of a new document. The genre of the new document is the same whether that document is expressed in its (intermediate) computational representation or its (final) human-readable representation. Both of these are localized representations, in that all the significant information pieces have been conveniently gathered into one place, either digital or physical.

In addition to input and output document genres, it is possible to consider the genre of the as-yet-unformed new document, even before the relevant pieces are extracted from the input documents and merged into a unified computational representation. This inchoate form of the new document neither is nor has the same genre as the output genre. Rather, it is preferable to say that this is a different kind of document genre, one that does not exist except across a plurality of other documents in other, more conventional, socially persistent genres (and typically, though not always, in multiple media). This new kind of document genre, a genre created across a distributed set of input genres, will be called a "distributed" genre ("implicit" and "synthetic" genres are also fairly accurate descriptive terms).

It should be noted that at least one characteristic distinguishes a distributed-genre document from the raw materials that constitute its inputs. The inchoate form of the new output document includes not only some set of identified pieces of information still resident in multiple input documents, but also a "glue" that holds them together so that together, they provide a distributed representation of a new document (that can later be transformed into a localized representation). The "glue" consists of two main components, namely, social context and computation.

A social context is defined by the intended reader(s), audience, or users of the output document, the purpose(s) for which it is being constructed, and the time at which it is being constructed. Additionally, social context is provided by the socially-constructed input and output document genres, which shape the intermediate distributed document genre, much as the dimensions of an input space and an output space affect the character of a matrix or tensor that transforms between the two spaces.

The social context; in turn, provides significant computational constraints. In particular, the human reader can provide hints, directives, and other guidance to the computational system of the invention. This information reflects the human's social context. Furthermore, the computational system includes models, heuristic algorithms, and/or other programming concerning input and output document genres and the relationships that allow information from certain input genres to be re-used in certain output genres. Taken together, the human-provided guidance; specific to the task at hand, and the largely pre-programmed description of genres, can provide an effective way to turn the user's understanding of social context into something that the system can process. This process is discussed in further detail below.

A distributed genre document therefore includes several things beyond the "raw material" of the identified portions in the input documents. It also includes: a specification of input genres, output genres, and a mapping of information between these; a further explication of social context, specific to the user and task at hand; and a computational engine, suitably programmed, that has the capacity to represent all of the above. Only with all these things, taken together, does the distributed genre document emerge. In sum, the notion of distributed genre arises when a distributed collection of information derived from multiple diverse source documents is bound together in a meaningful way through computations representing social context.

As a first example of a distributed-genre document, consider the calendar examples set forth above as Figures 7-12. Suppose that the computational system, preferably operating with some interactive human guidance, takes as its input a collection of documents found in a household with school-age children, such as:
- A child's sports league calendar;
- A social event announcement from church or synagogue;
- A parent-teacher event announced in a memo brought home from school;
- An advertisement for a performance by a local musical or theatrica group;
- A wedding invitation;
- An email announcement of an upcoming talk;
- A voicemail invitation to a party; and
- An annotated printout of an earlier version of the user's calendar.

Each of these input documents comes from its own distinct genre; however, when the distributed genre formed by the calendar information found in each document is considered, a distributed genre is defined. The ultimate goal when analyzing this particular distributed genre might be to produce an integrated, up-to-date, full-month calendar incorporating all and only the events that household members plan to attend (see, e.g., Fig. 12).

The collection of source documents is transformed from a jumble of raw source materials into a coherent, distributed-representation output document having a distributed genre via the interconnection provided by social context and by the human or computerized processing taking place in that social context. The social context is established by the particular group of readers in this household and by the purposes for which and timing with which they will use their new calendar, as well as by the (socially and culturally defined) genres of the input and output documents. The computation here takes advantage of and is facilitated - even enabled - by this social context. The computational system recognizes which portions of the input document are significant and how they fit together to make up the output document by taking into account:
- Characteristics of both the input and output document genres;
- Hints, directives, and other guidance received from the intended users of the calendar; and
- Time and other circumstances surrounding the computation itself, notably including the date and perhaps other state variables, such as the geographic location or the content of the system's most recent calendar-type outputs.

The intermediate distributed genre arises during the process of identifying dates and other useful information from the input documents. Soon thereafter, the computational system begins to form a localized, more unified output document, whose genre is the output genre specified by the user.

As a second example of a distributed genre approach, consider the problem faced by a busy worker who needs to send a change-of-address email message to a large number of recipients. The message body text is simple enough to write. The harder work, however, is to track down all the recipients' names and email addresses. A "personal address book" from the worker's email program is likely to be incomplete, so it can only serve as a starting point. Other email addresses to be added to the address list come from other genres. For example:
- An after-work networking opportunity yesterday evening has produced a fresh stack of business cards on the worker' s desk, which may be scanned with a business card-scanner.
- Some of the business cards include Web site addresses. The worker browses the Web sites, follows a few links, and discovers more addresses worth including in the letter, like the one on the Web page belonging to a long-lost college classmate who's now a distinguished professor.
- A printed announcement received in this morning's mail brings news of an old acquaintance whose firm has merged with another firm, resulting in a new email address. The printed announcement is too large for the business-card scanner and is of the wrong document genre besides. It will need to be scanned separately on a flatbed scanner or digital copier.
- A colleague calls the worker from a cellular phone. As it turns out, the colleague is the passenger in a car whose driver has been meaning for some time to extend a dinner invitation to the worker. The colleague relays the driver's invitation, together with his email address, verbally to the worker, who transcribes the email address longhand on an ordinary piece of paper.
- A good many addresses of interest come from previously received email messages. Extracting the addresses is not as easy as one might suppose. While many of the addresses can be detected simply by examining the "From" header field of the messages, others cannot. Indeed, useful addresses can and do appear anywhere in an email message, including the main text, all headers, and signature lines. Furthermore, address formats may be inconsistent. For example, one system may format its email addresses with the human-readable name preceding the Internet name, 'the latter being enclosed in angle brackets. Another system may leave this information out, showing only the Internet name.

The challenge for the computational system is to produce, from these disparate inputs, a single output document (namely, the worker's change-of-address message) that has all and only the desired addresses, preferably in a single, consistent format, placed in the "To" header field of the outgoing message. Duplicate addresses should be eliminated, and no one inadvertently left out.

Once again, this scenario can be understood in terms of distributed genre. The combined collection of electronic address book(s), digitally scanned business cards, old email messages and so forth is a collection of input documents in various genres and original media. Each contains one or more pieces of information to be recognized and extracted and merged by the system into an output document of specified genre for a particular user and purpose. The computational system reviews the various input documents together with the specification of the desired output genre and a set of hints or guidelines from the user, and identifies the relevant pieces of information from the input documents (as discussed in detail below). Again, as in the first example, the system also looks to the characteristics of the input genres and the relationships between these genres and the specified output genre to facilitate its task. A distributed-genre intermediate document is established across the input documents as the system begins to put together the output document (or, alternatively; as part and parcel of the construction of the output document). Eventually, the system constructs a unified computational representation of the new document, from which the output document can, in turn, be generated.

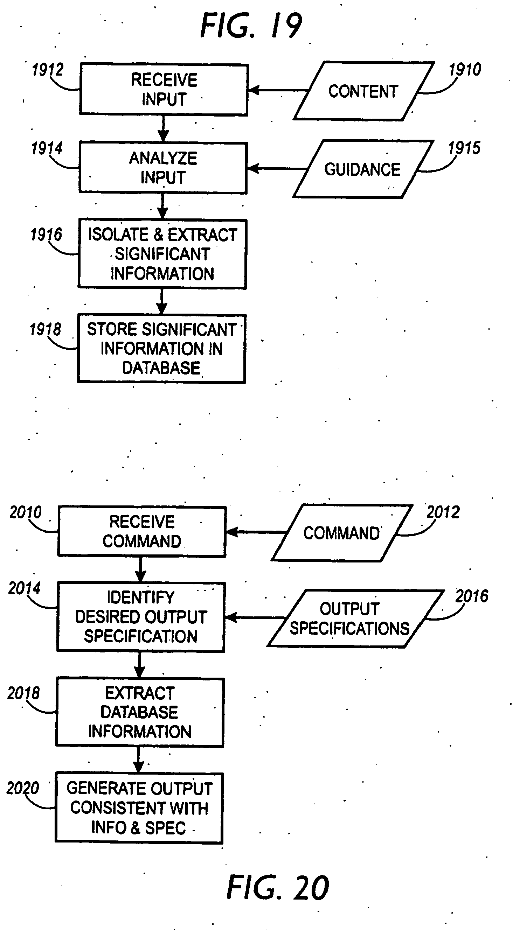

The method of receiving and processing documents in various input genres is set forth in Figure 19.

First, a collection of input documents (or any type of content 1910 at all) is input into and received by the system (step 1912). The input is then analyzed (step 1914), either automatically or semi-automatically (with user input) to identify the document's genre, thereby determining what information in the document may be significant. Exemplary automatic and semi-automatic methods for extracting information such as dates, times, addresses, and telephone numbers are discussed above. As above with the calendaring and streaming media embodiments above, guidance 1915 is provided in the form of a set of models or specifications for all expected types of input documents. These models, templates, or specifications can be pre-coded, or alternatively, can be trained (e.g., with a Hidden Markov Model) on the basis of repeated user input choices. Again, it should be noted that the guidance 1915 is provided even when the input analysis step (step 1914) is fully automatic; the requisite user input may have been provided earlier and used to shape genre models, or may be essentially hard-coded into the system. Moreover, in either case, the guidance 1915 represents the social context of the input documents.

The significant information in the input documents is recognized in a manner consistent with the notion of the intermediate, distributed genre document as has been described. In particular, the genres of the input documents are considered, and stored information (e.g., models, heuristics, statistics, etc.) about their respective characteristics and their relations to the specified output genre are employed to help direct the analysis. In addition, the nature of the output genre, user- or task-specific guidance, and various other factors may also be considered, such as the current time, date, and other state variables. There may be further interaction with the user at this stage; the analysis process may require more information if the problem to be solved is insufficiently constrained.

The significant information is then isolated and extracted (step 1916), and stored in (or "merged into") a database (step 1918). For a typical distributed genre document (or database), the "significant information" is all discernable information in a source document; any and all information might be used in an output document of unknown genre.

The generation of output is illustrated in connection with the flow chart of Figure 20. Typically, though not necessarily, the generation of output involves representing the unified computational representation (in the database) to the user as a human-readable document, either physical or digital, in a specified output genre. Typically, there is just one output document, drawn from a potentially large number of input documents. However, in an alternative use of the invention, there could be more than one output. For example, it might be beneficial to generate, for example, a set of related calendar printouts, one for each person in a group, each one slightly different according to the individual recipient.

The process begins by receiving (step 2010) a command 2012 indicating a request for an output document. This command 2012 identifies a particular desired output genre specification (step 2014) selected from a group of possible genre specifications 2016. The information from the database required to construct the output document is extracted (step 2018), and a document consistent with the selected genre specification is generated (step 2020) and presented to the user.

It should be observed that, while all (or nearly all) of the significant information from all of the source documents exists in the database, not all of the information will be useful in generating a particular output document. For example, where the database includes information derived from a number of calendars, e-mail messages, and business cards, among other things, and the user wishes to prepare a monthly calendar, most of the data derived from business cards will not be useful. Similarly, for the change-of-address notice described above, most of the calendar information will not be useful, unless the source calendars also contain individuals' names and contact information. Stated another way, the database exists across all genres, while a particular set of inputs or outputs may represent only a single genre or group of genres.

Various data characteristics are useful in assisting the derivation and extraction of useful information from documents of any genre; this is described above with regard to telephone numbers (see Fig. 18). In other words, certain characteristics of useful data types facilitate their identification within documents.

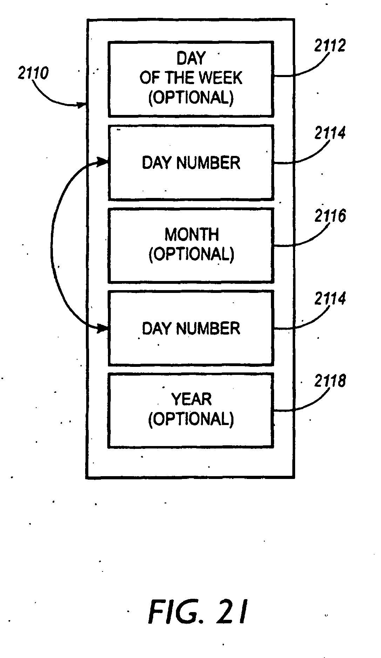

Referring now to Figure 21, the structure of a typical date 2110 is shown. A date, whether written or spoken, commonly begins with the day of the week 2112 (i.e., Sunday through Saturday). However, this is often omitted. Then, one of two conventions is used: either a day 2114 followed by a month (or its abbreviation or numeric equivalent) 2116, or a month 2116 followed by a day 2114. Examples of the former include "the seventeenth of December," "17 December," or the European-style "17.12," to name a few. Examples of the latter include "December 17," "Dec. 17," and the U.S.-style "12/17." Care should be exercised to distinguish U.S.-style numeric dates from European-style numeric dates; the document's genre will provide guidance in this area.

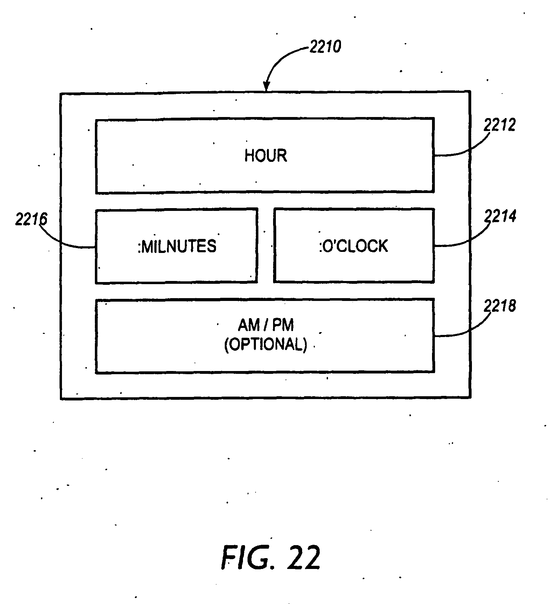

Figure 22 illustrates a typical written or spoken time 2210. An hour 2212 (1 through 12 in civilian time; 0 through 23 in military time) is followed by either an optional colon (:) and a number specifying minutes 2216, or the phrase "o' clock." 2214. In civilian time, either "AM" or "PM" 2218 usually follows, unless the time is unambiguous for other reasons (e.g., it would obviously occur during the business day).

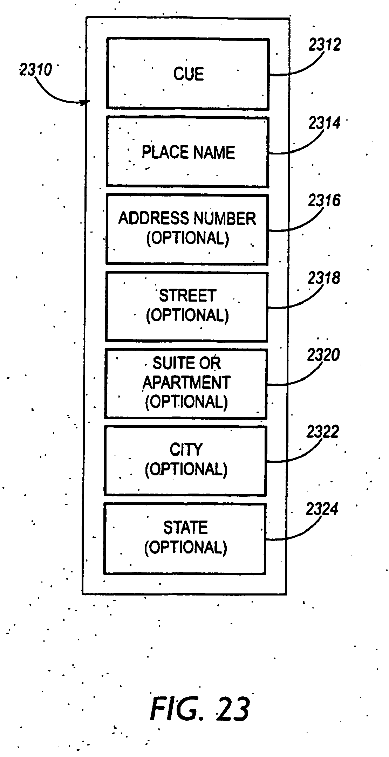

Figure 23 shows a typical location 2310; this format is followed by the wedding invitation of Fig. 11. A cue 2312, such as "at," is followed by a place name 2314 (e.g., "Saint Andrew's Episcopal Ctiurch"), an optional address number 2316 (e.g., "13601"), a street name 2318 (e.g., "Saratoga Avenue"), an optional suite or apartment 2320 (not applicable in Fig. 11), an optional city 2322 (e.g., "Saratoga"), and an optional state 2324 ("California").

Most previous work on genre analysis has focused on the fully automated extraction of document content. It is also useful to consider a different focus, namely human-guided identification and interaction with genre. As discussed above in connection with Figs. 4-6, user guidance is an important (and; at least in some cases, probably essential) part of the "glue" that turns raw input documents into a distributed genre document, as the form of distributed information can often be insufficient to guarantee its relevance. For example, there are dates of little concern embedded in the documents that describe calendar-related events. In the alternative example set forth above, when collecting e-mail addresses for a change-of-address notice, there may be inappropriate email addresses mixed with the desirable ones (as opposed to addresses that are simply redundant or out-of-date). Thus, even if one were able to model all of the diverse forms that might occur, they would not capture the full context of use; human guidance would still be necessary.

By allowing human guidance, the power and accuracy of the extraction can be increased. Furthermore, the possible input domain for a system according to the invention can also be greatly enhanced. Users today live in a world in which their information changes constantly; it can become out-of-date very rapidly. Moreover, users cannot control, and sometimes cannot even predict, the form or forms in which new information will arrive. In contrast with traditional relational databases, with their rigidly specified forms of input and carefully controlled data entry performed by dedicated workers, users of the present invention are generalists who live in a world of dynamic (and socially constructed) information that they must manage, but do not control.

Thus, in a presently preferred embodiment, the present invention does not attempt to automate the entire process of producing the distributed genre document. In particular, the user will often need to provide considerable guidance to the computer about what is most important in a given input document. At the same time, however, some automation is welcome, because the busy people who will use this technology at home and in the workplace often suffer from information overload. They want and deserve some labor-saving help. An automatic dishwasher still requires manual loading and unloading of the dishes, yet it can be a tremendous timesaver over hand washing. So, too, a semi-automated document analysis/synthesis system is worthwhile for the present invention.

Accordingly, we now consider, in detail, the types of guidance which would be appropriate for such a system, and in doing so describe a suite of techniques for facilitating and guiding the recognition, extraction, and merging tasks in semi-automated document analysis/synthesis systems that incorporate distributed genre approaches. Typically, the techniques involve marking up the input documents: a human makes marks by hand in a way that the computational system can process automatically with little or no further human intervention thereafter. The contemplated approaches include, but are not limited to:
Filtering. By choosing which documents are to be presented to the system, the user filters the universe of documents and hence bounds the problem space and exerts an initial rough control over the system: Further analysis can operate semi-automatically.
Before-and-after comparison. The user draws lines or circles, or makes other graphical marks, to indicate which parts of an input document are of particular interest, or even to indicate operations such as addition or deletion. For example, using the Formless Forms technology described above (U.S. Patent No. 5,692,073, which is hereby incorporated by reference as though set forth in full herein), a paper calendar could be automatically synchronized with an online calendar. Suppose that the calendar is first printed on paper. Over time, the paper is annotated with cross-outs for deleted appointments, arrows for moved appointments, and handwriting for new appointments. The paper copy can then be re-scanned, and re-synchronized with the electronic version. In the most advanced case, annotations for a given day are extracted, analyzed (via handwriting recognition), and inserted into an electronic calendar, which can then be re-printed if desired. The simpler tasks of moving and deleting appointments do not require recognition, just mark extraction as described in the '073 patent.
Pen-based annotation. At least two different user-pen interaction techniques can guide the system. First, either by using different pens, or by using different modes of a single pen (e.g. a pen which can use multiple colors), uses can use different forms of ink (either physical or virtual) to distinguish different forms of information, similar to how a highlighter is traditionally for some types of information and pencil for others..Second, by using a scanning pen, users can directly indicate which portions of the document have information of interest. The temporal order in which the lines are scanned, and the context of annotations made by the pen between such scans, can further guide the system. An example of this mode of operation is described in detail above, with particular reference to Figs. 7-11.
Modeling. As discussed above, various models of extractable document types can be prepared and used, with the appropriate model being chosen via pattern-based recognition. Generally speaking, models can either be of highly stylized document forms, or may specify genre structure.

As will be recognized, various other models of user interaction are also possible, including (as discussed above) iterated fully automatic attempts to extract information, followed by a user review step which either "rejects" the product, prompting another attempt, or implicitly accepts the product.

As described above, particularly with reference to Figs. 7-11, a smart scanning pen may be used as an input device in conjunction with the invention. A block diagram illustrating the functional components of such a pen 2410 is set forth as Figure 24. Such a device includes an on-board processor 2412, a data interface 2414 (such as an infrared or RF wireless link), an optical scanning head 2416, manually operable controls 2418 (such as at least one push-button), a visual feedback mechanism 2420 (such as an indicator light or display screen), optionally an audio or tactile feedback mechanism 2422, and on-board storage 2424. These functional components will be explained in further detail below.

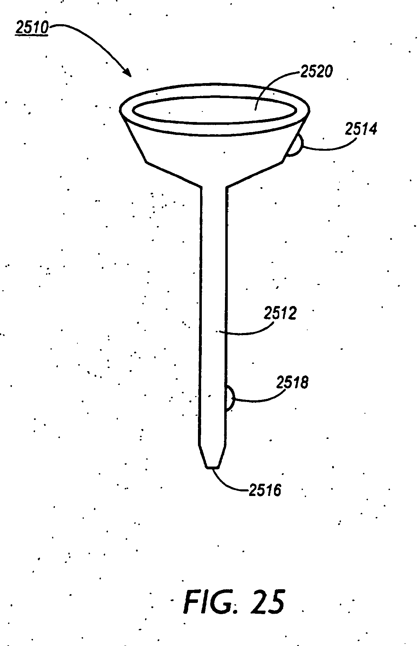

One embodiment of the scanning pen is visually represented in Figure 25. A pen 2510 includes a traditional pen-shaped body 2512, a bi-directional infrared transceiver 2514, a scanning head 2516, a push-button 2518, and a display screen 2520..

In a preferred embodiment of the pen 2510, the display screen 2520 is operable to confirm with the user at least two items of information: (a) recognized text under the scanning head 2516, and (b) the pen's current mode. As described above in conjunction with the calendaring system, a scanning pen can be used to extract multiple items of information from a printed calendar, including an event title, a date, and a time. Different events are indicated by pressing the button 2518. The scanning pen's mode comes into play as follows: after the button is pressed, the "resets" to expect a new batch of information. In a preferred embodiment of the invention, the various information items need not be scanned in any particular order, and can be identified by the system by virtue of the differing characteristics of the different data types. However, in a simplified embodiment, the pen may enforce a particular order to the fields to be entered (e.g., title first, then date, then time), and such requirements can be indicated on the display screen 2520. Moreover, the system may be expecting information from a different genre, such as a business card. A display of the pen's mode can be used to indicate to its user both the expected genre of the input and the particular data items to be input, either collectively or in sequence. In a preferred embodiment of the invention, manual mode changes can be brought about by scanning a digital code printed in a mode book (Fig. 27).

In one alternative of the pen 2510, the screen 2520 is 1 to 2 inches in diameter. In this configuration, it is possible to read the screen as the pen 2510 is used to scan text on a printed page. The pen's mode is indicated by colored indicators, and scanned text is displayed on the screen as scrolling text. At the center of the screen is the current field of view; text already scanned appears to the left (or right, if a line is scanned from right to left).

There is a sufficient area underneath the screen 2520 to accommodate on-board logic to support operating the display screen 2520, and optional storage area to accumulate data before transmitting it to the database 310 (Fig. 3). In one embodiment of the invention, input is stored in the pen's storage 2424 until a command (such as holding down the button 2518) indicates that the data should be transmitted to the database 310. Alternatively, the command to transmit may be initiated by the database 310, rather than the user.

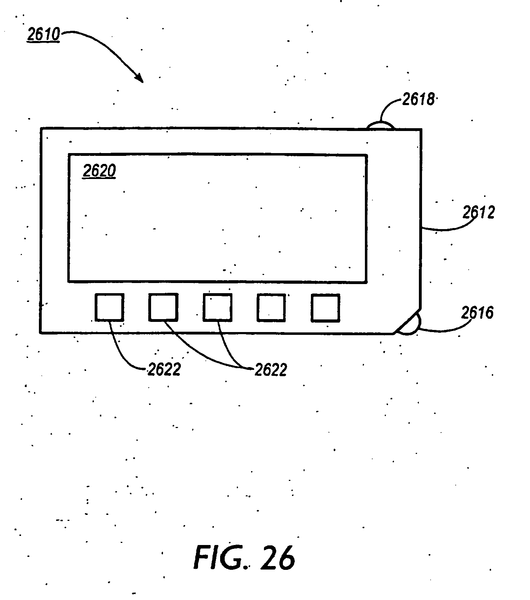

A scanning pen 2610 with an alternative form factor is illustrated in Figure 26. This version has a card-shaped body 2612 (preferably the size and shape of a credit card), a scanning head 2616 at one corner, and a button 2618 along its top edge. A display screen 2620 is situated on one side of the rectangular body; it is typically not visible while text is being scanned, but can be easily viewed when the pen 2610 is lifted from the paper. The pen also has multiple input buttons 2622, capable of facilitating mode changes or command entry.

A mode book 2710, usable to manually alter a scanning pen's mode, is illustrated in Figure 27. The mode book 2710 includes a plurality of mode cards 2712, each of which contains at least one scannable data field operative to change the pen's mode or enter a command. Each scannable data field comprises machine-readable information (e.g., a bar code, a two-dimensional glyph code, or easily-recognizable text) and a human-readable label. For example, the illustrated mode card 2712 includes nine data fields: a "begin date" field 2714 and a "begin time" field 2716, an "end date" field 2718 and an "end date" field 2720, a "location" field 2722, a "description" (or title) field 2724, and three command fields, to set a reminder 2726, mark an event as urgent 2728, or confirm existing information 2730.

The mode book 2710 is used as follows. If a user has been using his scanning pen 2410 to read business cards, for example, the system expects to receive data representative of a person's identity, office address, phone number, etc. However, if the user wishes to start inputting calendar information, there is no simple way to indicate that using simply the scanning pen. It is possible to use one or more input buttons to change the mode, but that method can be tedious and subject to error. Instead, using the mode book 2710, the user locates the mode card 2712 pertaining to the calendar genre, and runs the scanning pen over the selected field, such as "begin date" 2714. This indicates to the system that both a genre change and a mode change should occur. Subsequent swipes on the same calendar genre mode card 2712 will indicate only a mode change. Changing the mode before each document scanning swipe of the scanning pen 2410 can be made necessary to indicate the following information, or in a preferred embodiment, can override the system's defaults (as described with reference to Figs. 7-11).

In an alternative of the scanning pen 2410, mode changes and genre changes are indicated and confirmed to the user by either audible or tactile feedback. For example, audible beep codes or the like (even synthesized voice prompts) can be used to indicate that (a) the calendar genre is presently active, and (b) the system expects to receive a "begin date" next. Similarly, unique tactile sensations, implemented either by vibrating the pen body (as in a pager with a silent alarm) or by causing the scanning head 2416 to move in a manner simulating a texture on the paper being scanned, can express similar information to the user. Accordingly, the user need not look at the display screen 2520 or 2620 to confirm each and every mode change.

Although the scanning pen 2410 and mode book 2710 have been described with reference to the calendaring system disclosed above and business cards, it should be noted that the system is adaptable to read other types of documents, as well, simply by augmenting the mode book 2710 to specify different genres and data types.

According to a preferred embodiment of the moded scanning pen, the feedback device comprises an audio feedback generator being adapted to generate audio codes representative of the active input mode. Preferably, the audio codes are generated when a mode change occurs.

The feedback device comprises a tactile feedback generator, which is adapted to generate vibratory codes representative of the active input mode. Preferably, the vibratory codes are generated when a mode change occurs. Furthermore, in an advantageous embodiment, the tactile feedback generator is adapted to simulate a texture representative of the active input mode. Preferably, the texture is simulated while a scanning operation is performed.

According to an alternative of the scanning pen, it further comprises a user control which preferably comprises a button. It is furthermore preferred that the active input mode is selected either automatically or by manipulating the user control, or by scanning a machine-readable data field on a mode card.

## Claims

1. A multi-mode canning pen (2410, 2510, 2610), wherein the pen has an active input mode which is selected from a plurality of modes and which determines how scanned information is interpreted, comprising:
a processor (2412),
an optical scanning head (2416),
a data interface (2414), and
a button (2418, 2622) for indicating the start of a data record,
**characterized in that**
said processor (2412) is configured to select said active input mode automatically according to typical attributes of scanned values, and
the scanning pen (2410, 2510, 2610) comprising a tactile feedback generator (2422), wherein the tactile feedback generator (2422) is configured to generate vibratory codes representative of the active input mode.

2. The scanning pen of claim 1, configured to generate vibratory codes when a mode change occurs.

3. The scanning pen (2410, 2510, 2610) of one of the claims 1 to 2, comprising a display screen (2520, 2620).

4. The scanning pen (2410, 2510, 2610) of claim 3, wherein the display screen (2520, 2620) is adapted to display information representative of the active input mode.

5. The scanning pen (2410, 2510, 2610) of one of the claims 1 to 4, comprising an audio feedback generator (2422).

6. The scanning pen (2410, 2510, 2610) of claim 5, configured to generate audio codes representative of the active input mode.

7. The scanning pen (2410, 2510, 2610) of claim 5 or 6, configured to generate audio codes when a mode change occurs.

8. A method for using a multi-mode scanning pen (2410, 2510, 2610) to input a data record having a plurality of values including a first value and a second value, comprising the steps of:
depressing a button (2418, 2622) to indicate the start of the data record,
scanning the first value,
interpreting the first value in a manner defined by a first mode of the scanning pen,
scanning the second value, and
interpreting the second value in a manner defined by a second mode of the scanning pen,
**characterized in that**
said first and second modes of said scanning pen are selected automatically according to characteristics of said first and second values, and
vibratory codes representative of the active input mode are generated by a tactile feedback generator (2422).

## Patentansprüche

1. Multimodus-Lesestift (2410, 2510, 2610), wobei der Stift einen aktiven Eingabemodus aufweist, der von einer Vielzahl von Modi ausgewählt wird und der bestimmt, wie erfasste Information interpretiert wird, umfassend:
einen Prozessor (2412),
einen optischen Lesekopf (2416),
eine Datenschnittstelle (2414), und
eine Taste (2418, 2622) zum Angeben des Beginns eines Datensatzes,
**gekennzeichnet dadurch, dass**
der Prozessor (2412) konfiguriert ist, um den aktiven Eingabemodus anhand typischer Eigenschaften der erfassten Werte automatisch auszuwählen, und
der Lesestift (2410, 2510, 2610) einen taktilen Rückmeldungsgeber (2422) aufweist, wobei der taktile Rückmeldungsgeber (2422) konfiguriert ist, um Vibrationskodes zu erzeugen, die den aktiven Eingabemodus repräsentieren.

2. Lesestift gemäß Anspruch 1, konfiguriert, um Vibrationskodes zu erzeugen, wenn ein Moduswechsel erfolgt.

3. Lesestift (2410, 2510, 2610) gemäß einem der Ansprüche 1 bis 2, ferner einen Bildschirm (2520, 2620) umfassend.

4. Lesestift (2410, 2510, 2610) gemäß Anspruch 3, wobei der Bildschirm (2520, 2620) angepasst ist, um Informationen anzuzeigen, die den aktiven Eingabemodus repräsentieren.

5. Lesestift (2410, 2510, 2610) gemäß einem der Ansprüche 1 bis 4, ferner einen Audio-Rückmeldungsgeber (2422) umfassend.

6. Lesestift (2410, 2510, 2610) gemäß Anspruch 5, konfiguriert, um Audiokodes zu erzeugen, die den aktiven Eingabemodus repräsentieren.

7. Lesestift (2410, 2510, 2610) gemäß Anspruch 5 oder 6, konfiguriert, um Audiokodes zu erzeugen, wenn ein Moduswechsel erfolgt.

8. Verfahren zur Verwendung eines Multimodus Lesestiftes (2410, 2510, 2610), um einen Datensatz mit einer Vielzahl an Werten, beinhaltend einen ersten Wert und einen zweiten Wert, einzugeben, folgende Schritte umfassend:
drücken einer Taste (2418, 2622), um den Beginns eines Datensatzes anzugeben,
erfassen des ersten Wertes,
interpretieren des ersten Wertes in einer Art und Weise, die durch einen ersten Modus des Lesestiftes definiert ist,
erfassen des zweiten Wertes, und
interpretieren des zweiten Wertes in einer Art und Weise, die durch einen zweiten Modus des Lesestiftes definiert ist,
**gekennzeichnet dadurch, dass**
die ersten und zweiten Modi des Lesestiftes anhand Eigenschaften der ersten und zweiten Werte automatisch ausgewählt werden, und
Vibrationskodes, die den aktiven Eingabemodus repräsentieren, durch einen taktilen Rückmeldungsgeber (2422) erzeugt werden.

## Revendications

1. Crayon-lecteur à balayage ayant plusieurs modes d'opération (2410, 2510, 2610), dans lequel le crayon-lecteur a un mode d'entrée actif qui est choisi à partir d'une pluralité de modes et qui détermine comment une information balayée est interprétée, comprenant :
un processeur (2412),
une tête de balayage optique (2416),
une interface de données (2414), et
un bouton (2418, 2622) pour indiquer le début d'un enregistrement de données,
**caractérisé en ce que**
ledit processeur (2412) est configuré pour sélectionner ledit mode d'entrée actif automatiquement conformément à des attributs typiques de valeurs balayées, et
le crayon-lecteur à balayage (2410, 2510, 2610) comprend un générateur de signalisation en retour tactile (2422) dans lequel le générateur de signalisation en retour tactile (2422) est configuré pour générer des codes de vibration représentatifs du mode d'entrée actif.

2. Crayon-lecteur à balayage selon la revendication 1, configuré pour générer des codes de vibration lorsqu'un changement de mode a lieu.

3. Crayon-lecteur à balayage (2410, 2510, 2610) selon l'une des revendications 1 à 2, comprenant un écran d'affichage (2520, 2620).

4. Crayon-lecteur à balayage (2410, 2510, 2610) selon la revendication 3, dans lequel l'écran d'affichage (2520, 2620) est adapté pour afficher une information représentative du mode d'entrée actif.

5. Crayon-lecteur à balayage (2410, 2510, 2610) selon l'une des revendications 1 à 4, comprenant un générateur de signalisation en retour audio (2422).

6. Crayon-lecteur à balayage (2410, 2510, 2610) selon la revendication 5, configuré pour générer des codes audio représentatifs du mode d'entrée actif.

7. Crayon-lecteur à balayage (2410, 2510, 2610) selon la revendication 5 ou 6, configuré pour générer des codes audio lorsqu'un changement de mode a lieu.

8. Procédé d'utilisation d'un crayon-lecteur à balayage ayant plusieurs modes d'opération (2410, 2510, 2610) pour entrer un enregistrement de données ayant une pluralité de valeurs incluant une première valeur et une seconde valeur, comprenant les étapes consistant à :
appuyer sur un bouton (2418, 2622) pour indiquer le début de l'enregistrement de données,
balayer la première valeur,
interpréter la première valeur d'un manière définie par un premier mode du crayon-lecteur à balayage,
balayer la seconde valeur, et
interpréter la seconde valeur d'un manière définie par un second mode du crayon-lecteur à balayage,
**caractérisé en ce que**
lesdits premier et second modes dudit crayon-lecteur à balayage sont automatiquement sélectionnés conformément à des caractéristiques desdites première et seconde valeurs, et
des codes de vibrations représentatifs du mode d'entrée actif sont générés par un générateur de signalisation en retour tactile (2422).
